# EUROPÄISCHE PATENTSCHRIFT

(11) **EP 1 883 590 B1**
(45) Veröffentlichungstag und Bekanntmachung des Hinweises auf die Patenterteilung: **08.06.2011**
(21) Anmeldenummer: 06707466.6
(22) Anmeldetag: 08.03.2006
(51) Int. Cl.: B65D 90/48

(54) **SCHÜTTGUTVORRATSBEHÄLTER**
BULK MATERIAL CONTAINER
RESERVOIR DE STOCKAGE DE MATIERES EN VRAC

(30) Priorität: 22.04.2005 DE 102005018917
(43) Veröffentlichungstag der Anmeldung: 06.02.2008
(73) Patentinhaber: Schenck Process GmbH, 64293 Darmstadt (DE)
(72) Erfinder: HAX, Heinz, 64823 Gross-Umstadt (DE)
(74) Vertreter: Blumbach - Zinngrebe
(86) Internationale Anmeldenummer: PCT/EP2006/002103
(87) Internationale Veröffentlichungsnummer: WO 2006/114152

(56) Entgegenhaltungen:
- DE-A1- 10 242 156
- DE-A1- 19 934 149
- US-A- 3 350 936

## Beschreibung

Die Erfindung betrifft einen im wesentlichen zylindrischen Vorratsbehälter für körniges oder pulverförmiges Schüttgut mit einem unteren, im allgemeinen kegeligen, mit einer Schüttgut-Ausläuföffnung versehenen Austragteil, wobei an der Auslauföffnung eine steuerbare Absperrvorrichtung angeordnet ist. DE 19 934 149 beschreibt ein Vorratsbehälter mit einem Wägemodul.

Derartige Vorratsbehälter oder Silos werden üblicherweise von einem massiven Unterbau in vorgegebener Höhe über Grund aufrecht stehend gehalten und fassen gewöhnlich 50 t an Schüttgut oder mehr, das für die Befüllung von auf Lastkraftwagen montierten Tanks vorgehalten wird. Zum Füllen des Tanks mit Schüttgut fährt der Lkw in eine genau vorgegebene Position unter den Vorratsbehälter, in welcher ein Einfüllstutzen des Tanks sich genau unter der Absperrvorrichtung befindet. Das Öffnen der Absperrvorrichtung lässt das Schüttgut aufgrund seiner Schwerkraft in den Tank einrieseln. Aus Platzgründen soll der vertikale Abstand zwischen Absperrvorrichtung und Einfüllstutzen des Tanks möglichst klein sein. Da der Lkw mit zunehmendem Füllgrad des Tanks einfedert, muss zwischen Absperrvorrichtung und Einfüllstutzen ein dehnbares Bauteil etwa in Form eines Schlauches zwischengefügt werden.

Aus wirtschaftlichen Gründen soll die maximale Tragfähigkeit des Lkw und damit der maximale Füllgrad des Tanks bei einer Befüllung möglichst vollständig ausgenutzt werden. Die Verkehrssicherheit des beladenen Lkws zwingt dazu, ein Überfüllung des Tanks absolut auszuschließen. Dazu muss eine zweckmäßig elektronische Steuerung den augenblicklichen Füllgrad des Tanks erfassen und bei Erreichen des Maximalwertes ein sofortiges Schließen der Absperrvorrichtung veranlassen.

Zur Erfassung des Füllgrades kann das Gewicht der im Tank befindlichen Schüttgutmasse dienen. Man hat daher unter den Vorratsbehälter eine Fahrzeugwaage in Grund eingelassen, auf welcher der Lkw in der genannten Position steht. Eine derartige Maßnahme bedeutet jedoch einen erheblichen Aufwand, der zudem noch wertlos wird, wenn der Vorratsbehälter aus übergeordneten Gründen abgebaut und an anderer Stelle neu aufgebaut werden muss. Außerdem ist Vorschrift, dass das Fahrzeuggesamtgewicht erst bei Verlassen des Betriebsgeländes, auf welchem der Vorratsbehälter steht, bestimmt wird.

Der Erfindung liegt daher die Aufgabe zugrunde, eine einfachere Möglichkeit der Erfassung des Füllgrades des Tanks zu schaffen.

Bei dem eingangs genannten Vorratsbehälter es ist möglich, dass bezüglich der Auslaufrichtung des Schüttgutes abstromseitig zu der Absperrvorrichtung ein vom Schüttgutstrom durchlaufenes Wägemodul vorgesehen ist, welches das Gewicht des durch die Absperrvorrichtung auslaufenden Schüttgutes kontinuierlich erfasst und einer Steuerung gewichtsrepräsentierende Steuersignale zuleitet, wobei die Steuerung bei Erreichen eines vorgegeben Grenzwertes durch die aufsummierten Steuersignale das Schließen der Absperrvorrichtung veranlasst, Die Erfindung bringt den Vorteil, dass das Gewicht des aus dem Vorratsbehälter ausfließenden Schüttgutes unmittelbar, das heißt nicht erst über eine separate Fahrzeugwaage, gemessen werden kann. Außerdem ist ein Wägemodul weit weniger aufwendig und verbleibt auf Dauer am Vorratsbehälter. Ferner sind übliche Vorratsbehälter durch einfache Maßnahmen leicht durch ein Wägemodul mit zugehöriger Steuerung nachrüstbar.

Für einen Vorratsbehälter ist im einfachsten Fall eine Wägemodul einsetzbar, das in dem Dokument DE 102 53 078 B3 beschrieben ist. Der Einlauftrichter des Wägemoduls kann bevorzugt direkt an der Auslauföffnung der Absperrvorrichtung befestigt werden. Vor allem bei pulverförmigem Schüttgut wie etwa Zement empfiehlt sich die Zwischenschaltung einer Entstaubungsvorrichtung zwischen Absperrvorrichtung und Wägemodul. Ferner ist es ratsam, das Gehäuse des bekannten Wägemoduls so zu verändern, dass der Schüttgutstrom das Wägemodul in axialer Ausrichtung auf die Einlaufrichtung verläßt.

Es gibt Schüttgut-Materialien, für die es wünschenswert ist, dass ihnen im Tank ein zweites Schüttgut-Material so beigegeben wird, dass sich im Tank ein vorgegebenes Verhältnis des ersten Materials zum zweiten Material einstellt. Dazu sieht eine vorteilhafte Weiterbildung der Erfindung vor, dass das Wägemodul über einen kurzen Rohrstutzen mit der Absperrvorrichtung verbunden ist, in welchen ein Zulauf aus einer das zweite Material enthaltenden Dosiervorrichtung mündet. Das Wägemodul misst dann zwar das Gesamtgewicht des Schüttgutstromes aus erstem und zweitem Material. Andererseits ist das jeweils aktuelle Gewicht des das Wägemoduls durchströmenden ersten Schüttgutmaterials im wesentlichen eine durch das erste Material bestimmte Konstante. In der mit dem Wägemodul verbundenen Steuerung ist sowohl diese Konstante wie auch das vorgegebene Mischungsverhältnis des ersten zum zweiten Material gespeichert. Die Steuerung enthält eine Subtrahiereinrichtung, welche von dem aus dem Wägemodul erhaltenen, das aktuelle Gewicht des Schüttgutstromes aus erstem und zweiten Material repräsentierenden Signal die Konstante subtrahiert und das Subtraktionssignal mit dem gespeicherten Verhältniswert vergleicht. Das Ergebnissignal des Vergleichs schließlich steuert die Abgabe des zweiten Materials aus der Dosiervorrichtung. Diese Ausgestaltung der Erfindung hat also den Vorteil, dass dem Schüttgut aus dem Vorratsbehälter unmittelbar nach seiner Absperrvorrichtung ein zweites Material in vorgegebenem Verhältnis kontinuierlich zugemischt werden kann. Eine hierfür grundsätzlich geeignete Dosiervorrichtung ist in dem Dokument DE 199 47 516 A1 beschrieben.

Für eine besonders vorteilhafte Ausgestaltung empfiehlt sich ein Wägemodul, das gegenüber dem aus dem genannten Dokument bekannten Wägemodul dadurch weitergebildet ist, dass zwischen einer ein den Schüttgutstrom ablenkenden Flügelrad antreibenden Antriebswelle und einer dieses umgebenden Lagerhülse die Corioliskraftmessvorrichtung angeordnet ist. Die Erfassung der Corioliskraft kann dabei so feinfühlig ausgelegt werden, dass die Fehlerquote der Gewichtsmessung bei weniger als 1% liegt. Ist weiterhin der Antriebsmotor für die Antriebswelle zweckmäßig seitlich neben der Antriebswelle oder dem Wägemodulgehäuse angeordnet, lässt sich die axiale Bauhöhe des Wägemoduls wesentlich verkleinern und zwar bis zu unter etwa 100cm. Diese Ausführungsform erlaubt nicht nur, die Verweilzeit der Körner oder Pulverteile des Schüttgutstromes in dem Wägemodul auf weniger als etwa 100 ms abzukürzen, sondern ermöglicht auch einen Anbau des Wägemoduls an den Vorratsbehälter ohne Vergrößerung dessen Höhe über Grund. Die kurze Verweilzeit erlaubt trotz prinzipieller Unstimmigkeiten eine ausreichend präzise Verhältnisregelung der Massenströme. Die Erfindung betrifft einen im wesentlichen zylindrischen Vorratsbehälter mit den Merkmalen des Anspruchs 1.

Weitere vorteilhafte Ausgestaltungen der Erfindung sind in den Unteransprüchen angegeben. Ein Ausführungsbeispiel der Erfindung wird nachstehend anhand der beigefügten Zeichnung im einzelnen beschrieben. Es zeigen:
Figur 1 eine schematische Darstellung eines mit den Merkmalen der Erfindung ausgerüsteten Vorratsbehälters mit darunter in Position stehendem Lkw;
Figur 2 eine schematische Darstellung eines für die Erfindung nützlichen Wägemoduls; und

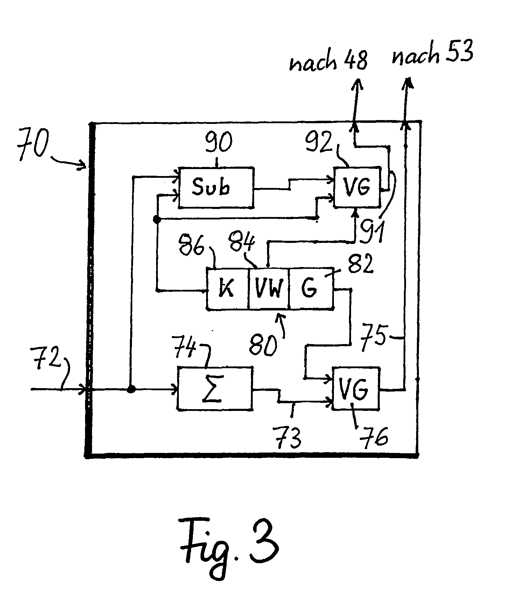

Figur 3 eine schematische Darstellung einer Steuerung mit für die Durchführung der Erfindung nützlichen Einrichtungen.

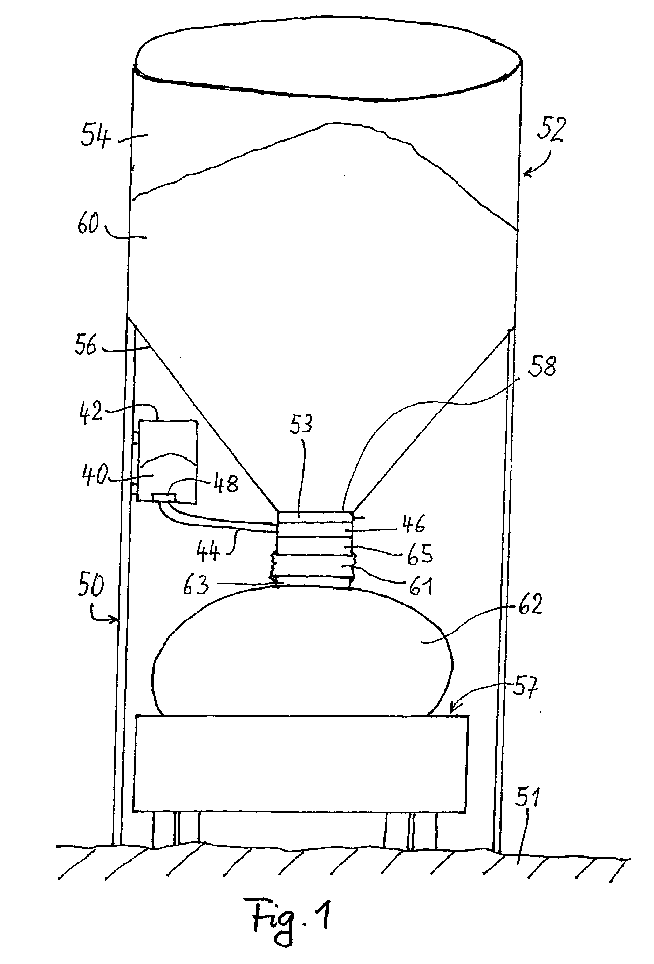

Ein massiver Unterbau 50 in Form von Stützen aus Stahl oder armiertem Beton trägt einen Vorratsbehälter 52, welcher einen im wesentlichen zylindrischen Hauptteil 54 und einen kegelig nach unten auf eine Auslauföffnung 58 zulaufenden Austragteil 56 aufweist. Die Steigung des Kegels ist natürlich so gewählt, dass ein im Vorratsbehälter 52 enthaltenes körniges oder pulverförmiges Schüttgut 60 nach Öffnung der Auslauföffnung 58 durch diese selbsttätig ausläuft. In Figur 1 ist zur Erläuterung nur eine teilweise Befüllung des Vorratsbehälter 52 mit Schüttgut 60 angedeutet; In praxi fasst der Vorratsbehälter Massen von Schüttgut von bis zu etwa 50 t oder mehr.

Der Unterbau 50 lässt unter dem Vorratsbehälter 52 eine Durchfahrt 55 für einen Lkw 57 frei, der beispielsweise als Sattelschlepper einen Tank 62 mitführt, der mit Schüttgut 60 aus dem Vorratsbehälter befüllt werden soll. Daher muss der Unterbau 50 den Vorratsbehälter 52 in solcher Höhe tragen, dass von der Unterkante des Vorratsbehälters 52 bis Grund 51 eine Durchfahrt-Höhe H für den Lkw eingehalten ist.

Das Austragteil 56 ist an der Auslauföffnung 58 mit einer Absperrvorrichtung 53 in Form eines steuerbaren Absperrventils ausgerüstet, welches mit einem dehnbaren, mit einem Tank-Einfülldom 63 zu verbindenden Schlauch 61 verbunden ist. Erfindungsgemäß ist die Absperrvorrichtung 53 mit einem nachfolgend beschriebenen Wägemodul 65 geringer axialer Bauhöhe gekoppelt, Die geringe Bauhöhe ermöglicht, daß die Höhe H durch das Wägemodul 65 praktisch nicht verkleinert wird.

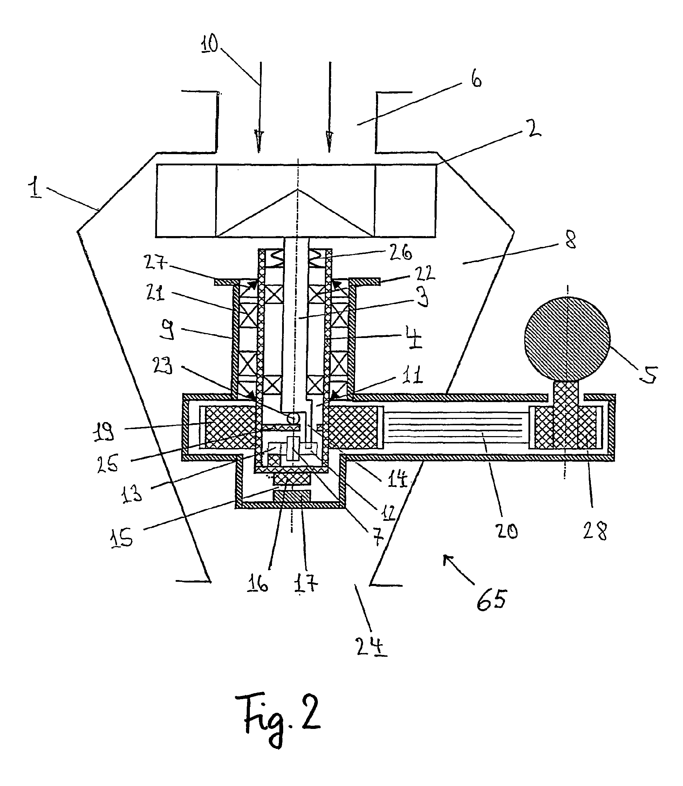

In Figur 2 ist ein Wägemodul zur Erfassung von Schüttgutströmen nach dem Coriolis-Prinzip schematisch als Schnittbild dargestellt, Das Wägemodul 65 weist im wesentlichen ein Gehäuseteil 1, in dem ein Flügelrad 2 rotiert, und eine darunter angeordnete Antriebs- und Messvorrichtung auf, deren Antriebswelle 3 durch eine angetriebene Lagerhülse 4 in das Gehäuseteil 1 ragt. Die Lagerhülse 4 ist drehbar in einem stationären Antriebsgehäuseteil 9 gelagert, wobei innerhalb der Lagerhülse 4 zwischen dieser und der Antriebswelle 3 eine Kraftmessvorrichtung 7 angeordnet ist.

Im Messbetrieb gelangt der Schüttgutstrom 10 als Massestrom durch eine Eintrittsöffnung 6 axial auf das Flügelrad 2, das aus einem horizontal angeordneten Teller mit radialen Leitblechen besteht und durch das das axial auftreffende Schüttgut 10 radial nach außen umgelenkt wird. Durch das mit konstanter Drehzahl umlaufende Flügelrad 2 wird der Schüttgutstrom 10 radial nach außen beschleunigt, wodurch aufgrund der CoriolisKraft ein Bremsmoment erzeugt wird, das dem Massestrom 10 proportional ist. Zum staubdichten Messbetrieb ist das Flügelrad 2 in dem umschlossenen Gehäuseteil 1 untergebracht, das im unteren Bereich eine Austrittsöffnung 24 besitzt, durch die das Schüttgut 10 in den Einfülldom 63 des Lkws gelangt.

Das Flügelrad 2 ist rotationssymmetrisch ausgebildet und besitzt eine zentrale Antriebswelle 3, die vertikal angeordnet ist und an ihrem unteren Ende einen Mitnahmezapfen 14 als Antriebsmittel aufweist, der mit der Kraftmessvorrichtung 7 in Eingriff steht. Die Antriebswelle 3 ist koaxial von der Lagerhülse 4 umgeben, die vom Flügelradgehäuseraum 8 bis in das darunter liegende Antriebsgehäuseteil 9 verläuft. Die Lagerhülse 4 ist im wesentlichen rohrförmig ausgebildet und erstreckt sich in axialer Länge über die Antriebswelle 3 hinweg und ist an seiner unteren Querschnittsfläche zylinderförmig verschlossen. Die Antriebswelle 3 ist in der Lagerhülse 4 durch zwei axial beabstandete Wälzlager 22 als Radiallager drehbar gelagert. An der unteren horizontalen Endfläche der Antriebswelle 3 stützt sich diese axial auf ein zentrales Kugellager 23 ab, das auf einem Quersteg 25 in der Lagerhülse 4 aufliegt und dadurch ein weitgehend reibungsfreies Axiallager der Antriebswelle 3 darstellt. Gleichzeitig wird durch die Anordnung der Lager 22 und 23 sichergestellt, dass keinerlei axiale oder radiale Störkräfte auf den Messkörper 7 a der Kraftmessvorrichtung 7 einwirken können. Da die Antriebswelle 3 zur Lagerhülse 4 nur geringfügig um höchstens 5° drehbar ist, sind sowohl die Lagerreibung der radialen Lager 22 und der axialen Lager 23 zu vernachlässigen. Die Radiallager können auch als Luftlager ausgebildet sein, um die Lagerreibung zu verbessern. Als günstige Alternative kann eine Gleitlagerung vorgesehen sein, die insbesondere bei Messvorrichtungen mit geringeren Masseströmen ausreicht. Soweit es der Platzbedarf zulässt, kann die Antriebswelle 3 reibungsfrei auch durch ein sogenanntes Kreuzfederelement entsprechend der DE 103 30 947.0 radial gelagert sein.

Zum Flügelradgehäuseraum 8 ist die Antriebswelle 3 mit einer Lagerabdichtung 26 gegen eindringendes Schüttgut geschützt. Da sich die Antriebswelle 3 gegenüber der Lagerhülse 4 nur geringfügig verdreht, ist eine dauerhafte dichte Verbindung vorgesehen. Vorzugsweise werden eng anliegende Gummidichtungen eingesetzt, die lediglich in Drehrichtung elastisch sein müssen. Bei einer vereinfachten Ausführung ist die Antriebswelle 3 sowohl zur Schüttgutabdichtung als auch zur Radiallagerung durch ein Elastomer an der Innenfläche der Lagerhülse 4 befestigt, wobei lediglich eine möglichst reibungsfreie Elastizität in Drehrichtung gewährleistet sein muss.

Die Lagerhülse 4 ihrerseits ist ebenfalls drehbar in dem stationären Antriebsgehäuseteil 9 durch zwei Wälzlager 21 radial und axial gelagert und zum Flügelradgehäuseraum 8 mittels eines Dichtelements 27 staubdicht abgedichtet. Das Dichtelement 27 kann auch im Wälzlager 21 integriert sein oder als 0-Ringdichtung ausgebildet werden. Da weder das Wälzlager 21 noch das Dichtelement 27 mit der vermessenen Antriebswelle 3 in Berührung kommt, sind dessen Reibungswerte messtechnisch unbeachtlich, so dass diese vorteilhaft so bemessen sein können, dass sie hauptsächlich eine hervorragende Steifigkeit im Falle der Lagerung bzw. Abdichtwirkung im Falle des Dichtelements auch gegenüber abrasiven Schüttgutstäuben aufweisen.

Im unteren Antriebsgehäuseteil 9 ist zum gemeinsamen Antrieb der Antriebswelle 3 und der Lagerhülse 4 ein Zahn- oder Riemenrad 19 als Lagerhülsenantriebsrad vorgesehen. Dies ist ringförmig um den unteren Teil der Lagerhülse 4 angeordnet und mit dieser fest verbunden. Seitlichen neben dem Lagerhülsenantriebsrad 19 ist im unteren Antriebsgehäuseteil 9 der Antriebsmotor 5 mit einem auf seiner Antriebswelle liegendem Antriebsrad 28 befestigt, das vorzugsweise über einen Zahnriemen 20 mit dem Lagerhülsenantriebsrad 19 verbunden ist. Dieser Motorantrieb kann aber auch durch einen Ketten-, Flachriemen- Keilriemen oder Zahnradantrieb erfolgen. Dieser parallel zur Lagerhülse 4 angeordnete Antriebsmotor 5 gestattet vorteilhafterweise einen horizontalen Antrieb, durch den eine geringe Bauhöhe erreichbar ist. Es ist aber auch denkbar, den Antriebsmotor 5 direkt unter der Lagerhülse 4 anzuordnen über eine feste Kupplung mit dieser zu verbinden. Allerdings gestattet die seitliche Anordnung ein Gehäuse 1, bei dem die Eintritts- 6 und Austrittsöffnungen 24 axial übereinander liegen und somit vorteilhaft in einem gradlinigen vertikalen Förderrohrteil integrierbar sind. Als Antriebsmotor 5 ist ein Elektromotor vorgesehen, der vorzugsweise als einfacher Asynchronmotor ausgebildet ist.

Im unteren Teil der Lagerhülse 4 ist die Kraftmessvorrichtung 7 angeordnet, die mit dem Mitnahmezapfen 14 im Eingriff steht. Die Kraftmessvorrichtung 7 ist als Kraftaufnehmer oder als Wägezelle ausgebildet und überträgt die Antriebskraft von der angetriebenen Lagerhülse 4 auf die Antriebswelle 3 und ist dadurch unmittelbar zwischen diesen angeordnet. Im Ausführungsbeispiel ist ein Doppelbiegebalkenaufnehmer als Kraftmessvorrichtung 7 vorgesehen, der aber auch durch eine rotationssymmetrische Wägezelle oder einen Drehmomentaufnehmer ersetzt werden könnte. Als Drehmomentaufnehmer werden dazu vorzugsweise rotationssymmetrische Drehmomentaufnehmer mit speicherartigen Verformungskörpern eingesetzt, an denen Dehnungsmessstreifen angeordnet sind, die koaxial zur Antriebswelle 3 oder in dessen Verlängerung zwischen dieser und der Lagerhülse 4 befestigt werden können. Da der eingesetzte Doppelbiegebalken 7 als Dehnungsmessstreifenaufnehmer ausgebildet ist, wird das dem Massestrom proportionale Bremsmoment durch eine geringfügige tangentiale Auslenkung des Doppelbiegebalkens erfasst, wobei Messwege an der Wägezelle von 0,1 bis 0, 5 mm üblich sind. Dadurch läuft die Antriebswelle 3 weitgehend synchron mit der Hülsendrehzahl um, wobei zwischen beiden maximal ein Drehwinkel von 5 ° möglich ist. Dabei ist die Kraftmessvorrichtung 7 vorzugsweise symmetrisch zur gemeinsamen Drehachse von Antriebswelle 3 und Lagerhülse angeordnet, wobei der Mitnahmezapfen 14 sich pendelnd auf den Doppelbiegebalken abstützt.

Die Antriebswelle 3 könnte auch unten aus der Lagerhülse 4 durch eine Bohrung herausgeführt werden, wobei die Kraftmessvorrichtung 7 dann in einem separaten Hülsenteil mit vergrößertem Innendurchmesser als mit dieser verbundenen Hohlkörper untergebracht sein könnte.

Unterhalb der Kraftmessvorrichtung 7 ist noch eine Telemetrievorrichtung 15 vorgesehen, über die die Messsignale vom Kraftaufnehmer 7 berührungslos zu einer Auswertevorrichtung übertragen werden. Dazu ist der Kraftaufnehmer 7 mit einer induktiven Sendevorrichtung 16 verbunden, durch die die Messsignale induktiv auf eine gegenüberliegend angeordnete induktive Empfangsvorrichtung 17 übertragen werden. Gleichzeitig dient die induktive Empfangsvorrichtung 17 zur Übertragung der Speisespannung auf die Sendevorrichtung 16, die zur Speisung der Dehnungsmessstreifen in dem Doppelbiegebalken dient. Die empfangenen Messsignale können dann über eine galvanische Verbindung oder auch eine drahtlose Sendestrecke an eine nicht dargestellte Auswertevorrichtung übertragen werden, die die Messsignale auswertet und anzeigt oder weiterverarbeitet. Die Übertragung der Messsignale wird vorzugsweise mittels eines Trägerfrequenzwechselstromes oder auch durch Infrarotübertragung vorgenommen.

Das stationäre Antriebsgehäuseteil 9 ist im wesentlichen zylinderförmig ausgebildet und in dem stationären Flügelradgehäuseteil 1 eingebaut, wobei das Motorgehäuseteil seitlich aus dem Flügelradgehäuseteil 1 herausgeführt ist und ein Teil des Antriebsgehäuseteils 9 darstellt. Das Flügelradgehäuseteil enthält an seiner oberen Seite die Eintrittsöffnung 6, die vorzugsweise einen Anschlussflansch enthält, der mit einem Förderrohr verschraubbar ist. In Durchflussrichtung ist das Flügelradgehäuse 1 kegelförmig ausgebildet und dabei soweit vom Antriebsgehäuseteil 9 beabstandet, dass das durchströmende Schüttgut vertikal von der Eintrittsöffnung 6 zur axial darunter liegenden Austrittsöffnung 24 gefördert wird, die ebenfalls mit einem Förderrohr verbindbar ist. Vorteilhafterweise sind dadurch Messgerätehöhen ab 250 mm möglich, mit denen schon Fördermengen von 20 t pro Stunde gemessen werden können. Mit Bauhöhen ab 900 mm können bereits Ausführungen bis 600 t pro Stunde realisiert werden.

Die Funktion der Messvorrichtung wird anhand der Zeichnung näher beschrieben. Im Leerlaufbetrieb, wenn kein Schütt gut auf das Flügelrad 2 geleitet wird, muss durch die Lagerhülse 4 lediglich ein Antriebsmoment bzw. Bremsmoment aufgebracht werden, das der Reibung im Messstrang entspricht. Da durch die synchron mit der Antriebswelle 3 umlaufende Lagerhülse 4 keine Reibung in diesem Teil des Antriebsstrangs entsteht, sind lediglich die Lagerreibungen, die durch Erschütterungen oder geringe Drehzahlschwankungen auftreten, von der Lagerhülse 4 aufzubringen. Die in diesem Teil entstehenden Reibungen sind verhältnismäßig gering, da sich die Antriebswelle 3 durch derartige Kräfte nur sehr gering der Lagerhülse 4 bewegt und durch die Wälzlagerung 22 auch kaum Reibungen auftreten. Ein entsprechendes Leerlaufdrehmoment wird deshalb im Grunde nur durch Luftturbulenzen am Flügelrad 2 erzeugt, das durch eine Tarierung der Messvorrichtung kompensiert wird, so dass sich durch die nahezu reibungsfreie Antriebswellenlagerung 22 eine hohe Nullpunktkonstanz ergibt.

Wird nun ein Schüttgutstrom 10 axial auf das Flügelrad 2 aufgegeben, entsteht durch die Umlenkung eine radiale Beschleunigung des Schüttgutstroms 10, durch eine Coriolis-Kraft an der Antriebswelle 3 ein zusätzliches Bremsmoment erzeugt, das dem Massestrom direkt proportional ist. Dadurch wird die mit der Antriebswelle 3 in Eingriff stehende Kraftmessvorrichtung 7 tangential maximal 0,1 bis 0,5 mm ausgelenkt und überträgt dieses Bremsmoment von der Antriebswelle 3 auf den Doppelbiegebalkenaufnehmer 7. Die durch den Doppelbiegebalkenaufnehmer 7 erfasste Kraft stellt somit einen Wert für den über das Flügelrad 2 laufenden Masse- oder Schüttgutstrom 10 dar. Über die bekannten geometrischen Abmessungen des Flügelrades 2 sowie die Hebelarmlängen am Doppelbiegebalkenaufnehmer 7 ist mit Hilfe einer nicht dargestellten Auswertevorrichtung die Förderstärke oder Fördermenge des über das Flügelrad 2 laufenden Massestromes ermittel- und anzeigbar.

Theoretisch ergibt sich bei konstanter Antriebsdrehzahl des Flügelrades 2, dass das erforderliche Antriebsdrehmoment zwischen dem Flügelrad 2 und dessen Antrieb genau dem Massendurchsatz proportional ist. Dies wird allerdings in der Praxis noch von zusätzlichen Bremsmomenten beeinflusst, die durch Reibungseinflüsse im Messstrang entstehen. Dieses Problem wird durch die erfinderische Maßnahme dadurch gelöst, dass im Messstrang bei der Antriebswellenlagerung beim Übergang zum Flügelradgehäuseraum 8 alle Reibungseinflüsse gänzlich ausgeschaltet werde. Dies wird dadurch erreicht, dass unmittelbar zwischen der Antriebswelle 3 und der Lagerhülse 4 die Kraftmessvorrichtung 7 vorgesehen ist, durch die nahezu keine Relativbewegung zwischen der Antriebswelle 3 und der Lagerhülse 4 entsteht, so dass die Antriebswelle 3 in ihrer gesamten Länge bis zur Kraftmessvorrichtung 7 reibungsfrei gelagert ist. Dabei kommt es insbesondere auch nicht auf die Art dieser drehbaren Radiallagerung 22 zwischen der Antriebswelle 3 und der Lagerhülse 4 an, so dass auch einfache Lagerungen vorgesehen werden können. Hingegen verlegt die Erfindung die Reibungseinflüsse in den Bereich zwischen den Außenmantel der Lagerhülse 4 und den stationären Antriebsgehäuseteil 9. Dadurch wird im Grunde die Antriebswelle 3 bis in den Flügelradgehäuseraum 8 von Reibungseinflüssen entkoppelt, weil die reibungsbehaftete Axial- und Radiallagerung 21 der Hülse 4 nicht im Messstrang bis zur Kraftmessvorrichtung 7 angeordnet ist. Es ist daher nahezu ausgeschlossen, dass Reibungseinflüsse an der Lagerabdichtung 26 und dort eventuell eintretende Schüttgutstäube die Messgenauigkeit beeinflussen können. Deshalb sind auch in diesem Bereich vorkommende Temperaturschwankungen beim Schüttgut für die Messgenauigkeit im Grunde unbeachtlich, da hierdurch zwar die Lagerreibung zwischen der Lagerhülse 4 und dem Antriebsgehäuseteil 9 schwankt, dies aber nicht das erfassbare Antriebsmoment beeinflusst, das auf den Doppelbiegebalkenaufnehmer 7 im Messstrang wirkt. Deshalb können vorteilhafterweise an der Lagerung 21 zwischen der Lagerhülse 4 und dem Antriebsgehäuseteil 9 auch reibungsbehaftete Dichtelemente 27 vorgesehen werden, die eine dauerhafte Abdichtung bei Schüttgütern mit stark abrasiven Staubanteilen gewährleisten.

Insbesondere wird durch die erfindungsgemäße reibungsfreie Antriebswellenlagerung, die gleichzeitig durch ihre Anordnung gewährleistet, dass keinerlei axiale oder radiale Störkräfte auf den Messkörper einwirken, auch die Messgenauigkeit bei geringen Masseströmen 10 verbessert, da die dann notwendigen relativ hohen Flügelraddrehzahlen auch bei geringeren Schüttgutschwankungen und ungleicher Flügelradbeladung zu relativ starken Unwuchten neigen, die sich hier nicht im Messstrang auswirken können. Des weiteren erlaubt eine derart reibungsfreie Lagerung des Messstrangs einen relativ kleinen Durchmesser des Lagerhülsenantriebsrades 19 im Verhältnis zum Flügelraddurchmesser, durch den eine höhere Messsignalempfindlichkeit zu erzielen ist, da reibungsbedingte Bremsmomentschwankungen im Messstrang minimiert werden. Dadurch ist auch bei kleinen Schüttgutströmen 10 eine hohe Nullpunktkonstanz gewährleistet.

Die Steuerung 70 weist einen programmierbaren ROM 80 auf, in dessen Abschnitt 82 ein das vom Tank 62 aufzunehmende Gesamtgewicht an Schüttgut gespeichert ist. Am Eingang 72 nimmt die Steuerung 70 die jeweiligen aktuellen Meßsignale aus dem Wägemodul 65 auf, welche in einer Summiereinrichtung 74 über den gesamten Befüllungsvorgang aufsummiert werden. Das sich daraus ergebende Summensignal wird über Leitung 73 einer Vergleichseinrichtung 76 zugeführt und in dieser mit dem aus dem Abschnitt 82 entnommenen Gesamtgewichtssignal verglichen. Das Vergleichsergebnissignal wird über die Ausgangsleitung 75 der Vergleichseinrichtung 76 der Absperrvorrichtung 53 als Steuersignal zugeführt oder zugesendet, wenn die Absperrvorrichtung 53 eine Empfangseinrichtung für das Steuersignal aufweist.

Wenn dem Schüttgut 60, das aus einem ersten Material besteht, ein zweites schüttfähiges Material 40 aus einer Dosiervorrichtung 42 während des Befüllungsvorgangs beigemischt werden soll, ist die Dosiervorrichtung 42 über ein Rohrstück 44 mit einem kurzen Stutzen 46 verbunden, der zwischen die Absperrvorrichtung 53 und dem Einlauftrichter des Wägemoduls 65 zwischengefügt ist. Ferner weist die Dosiervorrichtung ein steuerbares Abgabeventil 48 auf.

Üblicherweise oder auch entsprechend amtlicher Vorschrift ist das Mischungsverhältnis von erstem Material zu zweitem Material ein für den Befüllvorgang festgelegter Parameter. Dieser Parameter ist als Verhältniswertsignal in einem Abschnitt 84 des Speichers 80 in der Steuerung 70 abgespeichert. Das Wägemodul 65 misst in diesem Fall das jeweils aktuelle Gewicht des es durchströmenden Schüttgutstromes, der aus dem ersten und dem zweiten Material besteht. Daher wird das jeweils aktuelle Gewichtssignal aus dem Wägemodul 65 vom Eingang 72 einer Subtraktionseinrichtung 90 in der Steuerung 70 zugeführt, in welcher die einem Abschnitt 86 des Speichers 80 entnommene Konstante von dem Gewichtssignal subtrahiert wird. Die materialabhängige Konstante wird empirisch aus dem Gewichtssignal des Schüttgutstromes ermittelt, der nur das erste Material enthält. Das Ausgangssignal aus der Subtrahiereinrichtung 90 wird zusammen mit dem Abschnitt 84 entnommenen Verhältniswertsignal einer Vergleichseinrichtung 92 zugeführt, deren Ergebnisausgangssignal als Steuersignal über Leitung 91 dem Steuereingang des Abgabeventils 48 der Dosiervorrichtung 42 zugeführt oder zugesendet wird, wenn die Dosiervorrichtung über eine Empfangseinrichtung verfügt. Auf diese Weise kann die Einhaltung des Mischungsverhältnis auch bei schwankendem Schüttgutstrom aus dem Vorratsbehälter 52 sichergestellt werden.

## Patentansprüche

1. Vorratsbehälter für körniges oder pulverförmiges Schüttgut mit einem unteren, im Allgemeinen kegeligen, mit einer Schüttgut-Auslauföffnung (58) versehenen Austragteil (56), wobei an der Auslauföffnung eine steuerbare Absperrvorrichtung (53) angeordnet ist, wobei bezüglich der Auslaufrichtung des Schüttgutes abstromseitig zu der Absperrvorrichtung (53) ein vom Schüttgutstrom durchlaufenes Wägemodul (65) vorgesehen ist, wobei in dem Wägemodul zwischen einer ein den Schüttgutstrom ablenkenden Flügelrad antreibenden Antriebswelle (3) und einer dieses umgebenden Lagerhülse (4) eine Coriolis-Kraftmessvorrichtung (7) angeordnet ist, wobei das Wägemodul das Gewicht des durch die Absperrvorrichtung auslaufenen Schüttgutes kontinuierlich erfasst und einer Steuerung (70) gewichtsrepräsentierende Steuersignale zuleitet, wobei die Steuerung bei Erreichen eines vorgegebenen Grenzwertes durch die aufsummierten Steuersignale das Schließen der Absperrvorrichtung (53) veranlasst, **dadurch gekennzeichnet, dass** das stationäre Antriebesgehäuseteil (9) axial zylinderförmig ausgebildet ist und von einem nach oben kegelförmig verjüngenden statischen Flügelradgehäuse (1) umgeben ist und in gerader Durchflussrichtung axial übereinanderliegende Ein- (6) und Auslauföffnungen (24) enthält, wobei der Antriebsmotor (5) parallel seitlich neben dem Antriebsgehäuseteil (9) außerhalb des Flügelradgehäuses angeordnet ist.

2. Behälter nach Anspruch 1, **dadurch gekennzeichnet, dass** der Einlauttrichter des Wägemoduls direkt an der Auslauföffnung der Absperrvorrichtung befestigt ist.

3. Behälter nach Anspruch 1, **dadurch gekennzeichnet, dass** zwischen Absperrvorrichtung und Wägemodul eine Entstaubungsvorrichtung zwischengeschaltet ist.

4. Behälter nach einem der vorstehenden Ansprüche, **dadurch gekennzeichnet, dass** der Schüttgutstrom das Wägemodul in axialer Ausrichtung auf die Einlaufrichtung des Schüttgutstromes in das Wägemodul verlässt.

5. Behälter nach einem der vorstehenden Ansprüche, **dadurch gekennzeichnet, dass** das Wägemodul über einen kurzen Rohrstutzen (46) mit der Absperrvorrichtung (53) verbunden ist, in welchen ein Zulauf (44) aus einer Dosiervorrichtung (42) mündet.

6. Behälter nach Anspruch 5, **dadurch gekennzeichnet, dass** in ihm ein Schüttgut aus einem ersten Material und in der Dosiervorrichtung ein Schüttgut aus einem zweiten Material enthalten sind, welches dem ersten Material in einem vorgegebenen Mischungsverhältnis beizumischen ist.

7. Behälter nach Anspruch 6, **dadurch gekennzeichnet, dass gekennzeichnet**, dass in der Steuerung der Verhältniswert des Mischungsverhältnisses gespeichert ist und ein Dosierventil (48) der Dosiervorrichtung steuert.

8. Behälter nach einem der Ansprüche 5 - 7, **dadurch gekennzeichnet, dass** die Steuerung eine Subtrahiereinrichtung (90) aufweist, in welcher jeweils von dem aus dem Wägemodul erhaltenen, das aktuelle Gewicht des Schüttgutstromes aus erstem und zweitem Material repräsentierenden Signal eine Konstante subtrahiert wird und das Subtraktionssignal in einer Vergleichseinrichtung (90) mit dem gespeicherten Verhältniswert verglichen wird, und das Ergebnissignal des Vergleichs die Abgabe des zweiten Materials aus der Dosiervorrichtung (42) steuert.

9. Behälter nach einem der vorstehenden Ansprüche, **dadurch gekennzeichnet, dass** der Antriebsmotor (5) für die Antriebswelle (3) seitlich neben der Antriebswelle oder dem Wägemodulgehäuse angeordnet ist.

10. Behälter nach einem der vorstehenden Ansprüche, **dadurch gekennzeichnet, dass** die Kraftmessvorrichtung (7) innerhalb der Lagerhülse (4) oder innerhalb eines mit der Lagerhülse verbundenen Hohlkörpers angeordnet ist.

11. Behälter nach einem der vorstehenden Ansprüche, **dadurch gekennzeichnet, dass** die Kraftmessvorrichtung (7) als Biegebalkenaufnehmer, als rotationssymmetrische Wägezelle oder als Drehmomentaufnehmer ausgebildet ist.

12. Behälter nach einem der vorstehenden Ansprüche, **dadurch gekennzeichnet, dass** die Kraftmessvorrichtung (7) das von der Lagerhülse (4) aufgebrachte Antriebsmoment erfasst.

13. Behälter nach einem der vorstehenden Ansprüche, **dadurch gekennzeichnet, dass** die Kraftmessvorrichtung (7) mit ihrem Kraftaufnahmeteil (13) an einem im Innenbereich (11) der Lagerhülse (4) angeordneten Teil befestigt ist und dass sich die Antriebswelle (3) mit einem vom Drehpunkt beabstandeten Antriebsmittel (14) auf den Krafteinleitungsteil (12) abstützt und das Drehmoment zwischen der Lagerhülse und der Antriebswelle erfasst.

14. Behälter nach einem der vorstehenden Ansprüche, **dadurch gekennzeichnet, dass** die Kraftmessvorrichtung (7) mit einer Telemetrie-Einrichtung (15) verbunden ist, die aus einer an der Lagerhülse (4) angeordneten Sendevorrichtung (16) und einem am stationären Antriebsgehäuseteil (9) angeordneten Empfangsvorrichtung (17) besteht, mittels derer mindestens die erfassten Messsignale übertragbar sind.

15. Behälter nach einem der vorstehenden Ansprüche, **dadurch gekennzeichnet, dass** die Sende- (16) und Empfangsvorrichtung (17) Induktivitäten enthält, die so zueinander angeordnet sind, dass durch deren induktive Kopplung mithilfe von Wechselströmen sowohl die Messsignale als auch die Speisespannung für die Kraftmessvorrichtung übertragbar sind.

16. Behälter nach einem der vorstehenden Ansprüche, **dadurch gekennzeichnet, dass** die Lagerhülse über eine Antriebsvorrichtung (19, 20, 28) mit einem Motor (5) verbunden ist, wobei der Motor seitlich neben oder direkt unter der Lagerhülse (4) angeordnet ist.

17. Behälter nach einem der vorstehenden Ansprüche, **dadurch gekennzeichnet, dass** die Antriebsvorrichtung ein an der Lagerhülse befestigtes Antriebsrad (19) enthält, das über einen Riemen- (20), Ketten- oder Zahnradantrieb mit dem seitlich angeordneten Elektromotor verbunden ist, der zum Antrieb des Flügelrades (2) dient.

18. Behälter nach einem vorstehenden Ansprüche, **dadurch gekennzeichnet, dass** in dem stationären Antriebsgehäuseteil (9) die Lagerhülse drehbar angeordnet ist und bis in das Flügelradgehäuse (8) hineinragt und synchron mit der konstanten Flügelraddrehzahl umläuft.

19. Behälter nach einem der vorstehenden Ansprüche, **dadurch gekennzeichnet, dass** die Lagerhülse (4) durch Lager, insbesondere mittels Kugel- oder Kugelrollenlager (21), radial und axial im Antriebsgehäuseteil (9) gelagert ist.

20. Behälter nach einem der vorstehenden Ansprüche, **dadurch gekennzeichnet, dass** in der Lagerhülse die das Flügelrad (2) tragende Antriebswelle (3) drehbar gelagert ist, wobei die Antriebswelle sich antriebsmäßig so auf einer Kraftmessvorrichtung (7) abstützt, das durch die angetriebene Lagerhülse die Antriebswelle mit derselben Drehzahl umläuft.

21. Behälter nach einem der vorstehenden Ansprüche, **dadurch gekennzeichnet, dass** die Antriebswelle (3) durch ein Radiallager (22), insbesondere durch ein Gleit-, Kugel-, Luftlager oder ein Kreuzfederelement gegenüber der Lagerhülse (4) gelagert ist.

22. Behälter nach einem der vorstehenden Ansprüche; **dadurch gekennzeichnet, dass** die Antriebswelle gegenüber der Lagerhülse durch ein zentrales Axiallager (23), insbesondere durch ein Kugel- oder Spitzenlager axial gelagert ist, wodurch keine Axialkräfte auf den Messkörper einwirken können.

23. Behälter nach einem der vorstehenden Ansprüche, **dadurch gekennzeichnet, dass** die Kraftmessvorrichtung (7) mit der Steuerung (70) signalmäßig verbunden ist, die aus den erfassten Messsignalen, den geometrischen abmessungen und anderer physikalischer Parameter die Fördermenge des Schüttgutstromes durch das Wägemodul errechnet.

## Claims

1. Storage container for granular or powdery bulk material having a lower, generally conical discharge part (56) which is provided with a bulk material outlet opening (58), wherein a controllable cut-off device (53) is disposed at the outlet opening, wherein in relation to the discharge direction of the bulk material, on the downstream side of the cut-off device (53) there is provided a weighing module (65), through which the bulk material flow passes, wherein in the weighing module a Coriolis force measurement device (7) is disposed between a drive shaft (3), which drives the impeller wheel deflecting the bulk material flow, and a bearing sleeve (4) which surrounds said impeller wheel, wherein the weighing module continuously detects the weight of the bulk material being discharged through the cut-off device and feeds weight-representative control signals to a controller (70), wherein the controller triggers the closure of the cut-off device (53) when a predetermined limit value is reached by the added control signals, **characterised in that** the stationary drive housing part (9) is formed in an axially cylindrical manner and is surrounded by a static impeller wheel housing (1) tapering upwards in the shape of a cone and contains inlet openings (6) and outlet openings (24) which lie axially one above the other in a straight throughflow direction, wherein the drive motor (5) is disposed in parallel laterally adjacent to the drive housing part (9) outside the impeller wheel housing.

2. Container as claimed in claim 1, **characterised in that** the inlet funnel of the weighing module is attached directly to the outlet opening of the cut-off device.

3. Container as claimed in claim 1, **characterised in that** a dedusting device is connected between the cut-off device and the weighing module.

4. Container as claimed in any one of the preceding claims, **characterised in that** the bulk material flow leaves the weighing module in axial alignment with the inlet direction of the bulk material flow into the weighing module.

5. Container as claimed in any one of the preceding claims, **characterised in that** the weighing module is connected to the cut-off device (53) via a short pipe connector (46), into which a feed (44) issues from a metering device (42).

6. Container as claimed in claim 5, **characterised in that** it contains a bulk material consisting of a first material and the metering device contains a bulk material consisting of a second material which is to be added to the first material in a predetermined mixing ratio.

7. Container as claimed in claim 6, **characterised in that** the ratio value of the mixing ratio is stored in the controller and a metering valve (48) controls the metering device.

8. Container as claimed in any one of claims 5 - 7, **characterised in that** the controller has a subtraction device (90), in which a constant is subtracted in each case from the signal which is obtained from the weighing module and represents the current weight of the bulk material flow of the first and second material, and the subtraction signal is compared in a comparison device (90) with the stored ratio value and the resulting signal of the comparison controls the discharge of the second material from the metering device (42).

9. Container as claimed in any one of the preceding claims, **characterised in that** the drive motor (5) for the drive shaft (3) is disposed laterally adjacent to the drive shaft or the weighing module housing.

10. Container as claimed in any one of the preceding claims, **characterised in that** the force measurement device (7) is disposed within the bearing sleeve (4) or within a hollow body which is connected to the bearing sleeve.

11. Container as claimed in any one of the preceding claims, **characterised in that** the force measurement device (7) is designed as a beam-bend sensor, as a rotationally symmetrical weighing cell, or as a torque sensor.

12. Container as claimed in any one of the preceding claims, **characterised in that** the force measurement device (7) detects the drive moment applied by the bearing sleeve (4).

13. Container as claimed in any one of the preceding claims, **characterised in that** the force measurement device (7) is attached with its force sensing part (13) to a part disposed in the inner region (11) of the bearing sleeve (4), and **in that** the drive shaft (3) is supported with a drive means (14), which is spaced apart from centre of rotation, on the force introduction part (12) and detects the torque between the bearing sleeve and the drive shaft.

14. Container as claimed in any one of the preceding claims, **characterised in that** the force measurement device (7) is connected to a telemetry device (15) which consists of a transmitting device (16) disposed on the bearing sleeve (4) and a receiving device (17) disposed on the stationary drive housing part (9), by means of which at least the detected measurement signals can be transmitted.

15. Container as claimed in any one of the preceding claims, **characterised in that** the transmitting device (16) and receiving device (17) contain inductances which are disposed with respect to each other such that by virtue of their inductive coupling, with the aid of alternating currents the measurement signals and also the supply voltage for the force measurement device can be transmitted.

16. Container as claimed in any one of the preceding claims, **characterised in that** the bearing sleeve is connected via a drive device (19, 20, 28) to a motor (5), wherein the motor is disposed laterally adjacent to or directly below the bearing sleeve (4).

17. Container as claimed in any one of the preceding claims, **characterised in that** the drive device contains a drive wheel (19) which is attached to the bearing sleeve and which is connected via a belt drive (20), chain drive or gear drive to the laterally disposed electric motor which is used for driving the impeller wheel (2).

18. Container as claimed in any one [of the] preceding claims, **characterised in that** the bearing sleeve is disposed so as to be able to rotate in the stationary drive housing part (9) and protrudes into the impeller wheel housing (8) and rotates synchronously at the constant impeller wheel rotational speed.

19. Container as claimed in any one of the preceding claims, **characterised in that** the bearing sleeve (4) is supported by bearings, in particular by means of ball bearings or ball roller bearings, radially and axially in the drive housing part (9).

20. Container as claimed in any one of the preceding claims, **characterised in that** the drive shaft (3) carrying the impeller wheel (2) is supported so as to be able to rotate in the bearing sleeve, wherein the drive shaft is drivingly supported on a force measurement device (7), such that by virtue of the driven bearing sleeve the drive shaft rotates at the same rotational speed.

21. Container as claimed in any one of the preceding claims, **characterised in that** the drive shaft (3) is supported relative to the bearing sleeve (4) by means of a radial bearing (22), in particular by means of a sliding bearing, ball bearing, air bearing or a cross-shaped spring element.

22. Container as claimed in any one of the preceding claims, **characterised in that** the drive shaft is supported in the axial direction relative to the bearing sleeve by means of a central axial bearing (23), in particular by means of a ball bearing or point bearing, whereby no axial forces can act upon the measurement body.

23. Container as claimed in any one of the preceding claims, **characterised in that** the force measurement device (7) is connected in terms of signals to the controller (70) which uses the detected measurement signals, the geometric dimensions and other physical parameters to calculate the delivery volume of the bulk material flow through the weighing module.

## Revendications

1. Réservoir de stockage pour produit en vrac granuleux ou pulvérulent comprenant une partie d'évacuation (56) inférieure, généralement conique, dotée d'une ouverture de sortie de produit en vrac (58), un dispositif d'obturation (53) contrôlable étant disposé sur l'ouverture de sortie, un module de pesée (65) traversé par le flux de produit en vrac étant prévu par rapport au sens de sortie du produit en vrac côté d'aval du dispositif d'obturation (53), un dispositif de mesure de force de Coriolis (7) étant disposé dans le module de pesée entre un arbre d'entraînement (3) entraînant une roue à ailettes déviant le flux de produit en vrac et un coussinet (4) entourant cette roue, le module de pesée enregistrant de façon continue le poids du produit en vrac sortant par le dispositif d'obturation et acheminant des signaux de commande représentant le poids à une commande (70), la commande ordonnant la fermeture du dispositif d'obturation (53) lorsqu'une valeur limite prédéfinie est atteinte par les signaux de commande totalisés, **caractérisé en ce que** la partie de boîtier d'entraînement (9) fixe est conçue axialement en forme de cylindre et est entourée d'un boîtier de roue à ailettes (1) statique se rétrécissant en forme de cône vers le haut et contient des ouvertures d'entrée (6) et des ouvertures de sortie (24) se superposant axialement dans le sens d'écoulement droit, le moteur d'entraînement (5) étant disposé parallèlement sur le côté à côté de la partie de boîtier d'entraînement (9) à l'extérieur du boîtier de roue à ailettes.

2. Réservoir selon la revendication 1, **caractérisé en ce que** l'entonnoir d'entrée du module de pesée est fixé directement sur l'ouverture de sortie du dispositif d'obturation.

3. Réservoir selon la revendication 1, **caractérisé en ce qu'**un dispositif de dépoussiérage est intercalé entre le dispositif d'obturation et le module de pesée.

4. Réservoir selon l'une quelconque des revendications précédentes, **caractérisé en ce que** le flux de produit en vrac quitte le module de pesée dans la direction axiale vers le sens d'entrée du flux de produit en vrac dans le module de pesée.

5. Réservoir selon l'une quelconque des revendications précédentes, **caractérisé en ce que** le module de pesée est relié au dispositif d'obturation (53) par une courte tubulure (46) dans laquelle débouche une arrivée (44) provenant d'un dispositif de dosage (42).

6. Réservoir selon la revendication 5, **caractérisé en ce qu'**il contient un produit en vrac constitué d'un premier matériau et le dispositif de dosage contient un produit en vrac constitué d'un second matériau, lequel doit être mélangé au premier matériau dans un rapport de mélange prédéfini.

7. Réservoir selon la revendication 6, **caractérisé en ce que** la valeur du rapport de mélange est mémorisée dans la commande et commande une vanne de dosage (48) du dispositif de dosage.

8. Réservoir selon l'une quelconque des revendications 5 à 7, **caractérisé en ce que** la commande présente un dispositif de soustraction (90), dans lequel une constante est soustraite à chaque fois du signal obtenu à partir du module de pesée et représentant le poids actuel du flux de produit en vrac constitué du premier et du second matériau et le signal de soustraction est comparé dans un dispositif de comparaison (90) avec la valeur de rapport mémorisée, et le signal de résultat de la comparaison commande la distribution du second matériau à la sortie du dispositif de dosage (42).

9. Réservoir selon l'une quelconque des revendications précédentes, **caractérisé en ce que** le moteur d'entraînement (5) pour l'arbre d'entraînement (3) est disposé latéralement à côté de l'arbre d'entraînement ou du boîtier de module de pesée.

10. Réservoir selon l'une quelconque des revendications précédentes, **caractérisé en ce que** le dispositif de mesure de force (7) est disposé à l'intérieur du coussinet (4) ou à l'intérieur d'un corps creux relié au coussinet.

11. Réservoir selon l'une quelconque des revendications précédentes, **caractérisé en ce que** le dispositif de mesure de force (7) est conçu sous forme d'enregistreur à poutre de pliage, sous forme de cellule de pesée à symétrie de rotation ou sous forme d'enregistreur de couple.

12. Réservoir selon l'une quelconque des revendications précédentes, **caractérisé en ce que** le dispositif de mesure de force (7) enregistre le moment d'entraînement appliqué par le coussinet (4).

13. Réservoir selon l'une quelconque des revendications précédentes, **caractérisé en ce que** le dispositif de mesure de force (7) est fixé avec sa partie de réception de force (13) sur une partie disposée dans la zone intérieure (11) du coussinet (4) et **en ce que** l'arbre d'entraînement (3) s'appuie avec un moyen d'entraînement (14) espacé du point de rotation sur la partie d'application de force (12) et enregistre le couple entre le coussinet et l'arbre d'entraînement.

14. Réservoir selon l'une quelconque des revendications précédentes, **caractérisé en ce que** le dispositif de mesure de force (7) est relié à un dispositif de télémétrie (15), qui comprend un dispositif d'émission (16) disposé sur le coussinet (4) et un dispositif de réception (17) disposé sur la partie de boîtier d'entraînement (9) fixe, au moyen desquels au moins les signaux de mesure enregistrés peuvent être transmis.

15. Réservoir selon l'une quelconque des revendications précédentes, **caractérisé en ce que** le dispositif d'émission (16) et le dispositif de réception (17) contiennent des inductances qui sont disposées les unes par rapport aux autres, de telle sorte qu'aussi bien les signaux de mesure que la tension d'alimentation pour le dispositif de mesure de force peuvent être transmis par leur couplage inductif à l'aide de courants alternatifs.

16. Réservoir selon l'une quelconque des revendications précédentes, **caractérisé en ce que** le coussinet est relié à un moteur (5) au moyen d'un dispositif d'entraînement (19, 20, 28), le moteur étant disposé latéralement à côté ou directement au-dessous du coussinet (4).

17. Réservoir selon l'une quelconque des revendications précédentes, **caractérisé en ce que** le dispositif d'entraînement contient une roue d'entraînement (19) fixée sur le coussinet, qui est reliée par un entraînement à courroie (20), un entraînement à chaîne ou un entraînement à roue dentée au moteur électrique disposé sur le côté, qui sert à l'entraînement de la roue à ailettes (2).

18. Réservoir selon l'une quelconque des revendications précédentes, **caractérisé en ce que** le coussinet est disposé de façon rotative dans la partie de boîtier d'entraînement (9) fixe et dépasse jusque dans le boîtier de roue à ailettes (8) et tourne de façon synchrone avec le régime constant de la roue à ailettes.

19. Réservoir selon l'une quelconque des revendications précédentes, **caractérisé en ce que** le coussinet (4) est fixé par des paliers, en particulier au moyen de paliers à billes ou de paliers à rouleaux à billes (21), radialement et axialement dans la partie de boîtier d'entraînement (9).

20. Réservoir selon l'une quelconque des revendications précédentes, **caractérisé en ce que** l'arbre d'entraînement (3) portant la roue à ailettes (2) est monté de façon rotative dans le coussinet, l'arbre d'entraînement s'appuyant au niveau entraînement sur un dispositif de mesure de force (7), de telle sorte que l'arbre d'entraînement tourne avec le même régime sous l'effet du coussinet entraîné.

21. Réservoir selon l'une quelconque des revendications précédentes, **caractérisé en ce que** l'arbre d'entraînement (3) est fixé par un palier radial (22), en particulier par un palier à glissement, un palier à billes, un palier à air ou un élément à ressort croisé par rapport au coussinet (4).

22. Réservoir selon l'une quelconque des revendications précédentes, **caractérisé en ce que** l'arbre d'entraînement est fixé axialement par rapport au coussinet par un palier axial (23) central, en particulier par un palier à billes ou un palier à pivot, de sorte qu'aucune force axiale ne peut agir sur le corps à mesurer.

23. Réservoir selon l'une quelconque des revendications précédentes, **caractérisé en ce que** le dispositif de mesure de force (7) est relié au niveau du signal à la commande (70), qui calcule, à partir des signaux de mesure enregistrés, des dimensions géométriques et d'autres paramètres physiques, le débit du flux de produit en vrac traversant le module de pesée.
